# EUROPEAN PATENT SPECIFICATION

(11) **EP 3 592 025 B1**
(45) Date of publication and mention of the grant of the patent: **05.07.2023**
(21) Application number: 17898895.2
(22) Date of filing: 23.10.2017
(51) Int. Cl.: H04W 28/02, H04W 72/04

(54) **METHOD AND DEVICE FOR CONFIGURING RADIO RESOURCE, AND STORAGE MEDIUM**
VERFAHREN UND VORRICHTUNG ZUM KONFIGURIEREN VON FUNKRESSOURCEN UND SPEICHERMEDIUM
PROCÉDÉ ET DISPOSITIF DE CONFIGURATION DE RESSOURCE RADIO, ET SUPPORT DE STOCKAGE

(30) Priority: 02.03.2017 CN 201710120861
(43) Date of publication of application: 08.01.2020
(73) Proprietor: ZTE Corporation, Shenzhen, Guangdong 518057 (CN)
(72) Inventor: XU, Hui, Shenzhen Guangdong 518057 (CN); WANG, Yaying, Shenzhen Guangdong 518057 (CN); LU, Chen, Shenzhen Guangdong 518057 (CN); XIE, Fang, Shenzhen Guangdong 518057 (CN); DING, Jianfeng, Shenzhen Guangdong 518057 (CN); HUA, Xiaoquan, Shenzhen Guangdong 518057 (CN)
(74) Representative: Vitillo, Giuseppe
(86) International application number: PCT/CN2017/107353
(87) International publication number: WO 2018/157611

(56) References cited:
- WO-A1-2016/033742
- CN-A- 101 926 198
- CN-A- 103 517 326
- CN-A- 104 159 254
- CN-A- 105 847 177
- HUAWEI ET AL: "Congestion Control for Uu and PC5 based V2X transmission", 3GPP DRAFT; R2-163808 CONGESTION CONTROL FOR UU AND PC5 BASED V2X TRANSMISSION, 3RD GENERATION PARTNERSHIP PROJECT (3GPP), MOBILE COMPETENCE CENTRE ; 650, ROUTE DES LUCIOLES ; F-06921 SOPHIA-ANTIPOLIS , vol. RAN WG2, no. Nanjing, China; 20160523 - 20160527 14 May 2016 (2016-05-14), XP051095348, Retrieved from the Internet: URL:http://www.3gpp.org/ftp/tsg_ran/WG2_RL 2/TSGR2_94/Docs/ [retrieved on 2016-05-14]
- ZTE: "Detailed signalling design for CBR measurement and reporting", 3GPP DRAFT; R2-1700789_DETAILED RRC SIGNALLING DESIGN FOR CBR MEASUREMENT AND REPORTING, 3RD GENERATION PARTNERSHIP PROJECT (3GPP), MOBILE COMPETENCE CENTRE ; 650, ROUTE DES LUCIOLES ; F-06921 SOPHIA- , vol. RAN WG2, no. Athens, Greece; 20170213 - 20170217 3 February 2017 (2017-02-03), XP051222748, Retrieved from the Internet: URL:http://www.3gpp.org/ftp/tsg_ran/WG2_RL 2/TSGR2_97/Docs/ [retrieved on 2017-02-03]
- LG ELECTRONICS INC: "Channel busy ratio reporting", 3GPP DRAFT; R2-1701978 CHANNEL BUSY RATIO REPORTING, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. Athens, Greece; 20170213 - 20170217 4 February 2017 (2017-02-04), XP051223822, Retrieved from the Internet: URL:http://www.3gpp.org/ftp/tsg_ran/WG2_RL 2/TSGR2_97/Docs/ [retrieved on 2017-02-04]
- ERICSSON: "Congestion Control for Sidelink-based V2X", 3GPP DRAFT; R2-1700929 - CONGESTION CONTROL FOR SIDELINK-BASED V2X, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRA , vol. RAN WG2, no. Athens, Greece; 20170213 - 20170217 12 February 2017 (2017-02-12), XP051211703, Retrieved from the Internet: URL:http://www.3gpp.org/ftp/Meetings_3GPP_ SYNC/RAN2/Docs/ [retrieved on 2017-02-12]
- HUAWEI ET AL: "Remaining details of congestion control", 3GPP DRAFT; R1-1701726, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Athens, Greece; 20170213 - 20170217 6 February 2017 (2017-02-06), XP051220590, Retrieved from the Internet: URL:http://www.3gpp.org/ftp/tsg_ran/WG1_RL 1/TSGR1_88/Docs/ [retrieved on 2017-02-06]

## Description

### TECHNICAL FIELD

The present application relates to the field of Vehicle to Everything (V2X) technologies and, in particular, to a radio resource configuration method and apparatus, and a storage medium.

### BACKGROUND

With the rapid development of the economic society, a road traffic safety problem has become one of the basic problems affecting the social harmony and the improvement of people's livelihood.

It has become a new way to solve road traffic safety problems at present by using a communications-based collision warning system, which employs advanced wireless communication technologies and a new generation of information processing technologies, to implement real-time information interactions between vehicles and between vehicles and roadside infrastructure, inform each other of the current status (including position, speed, acceleration and traveling path of the vehicle) and the learned road environment information, cooperatively acquire road hazard conditions, and provide various collision warning information in time to prevent road traffic accidents.

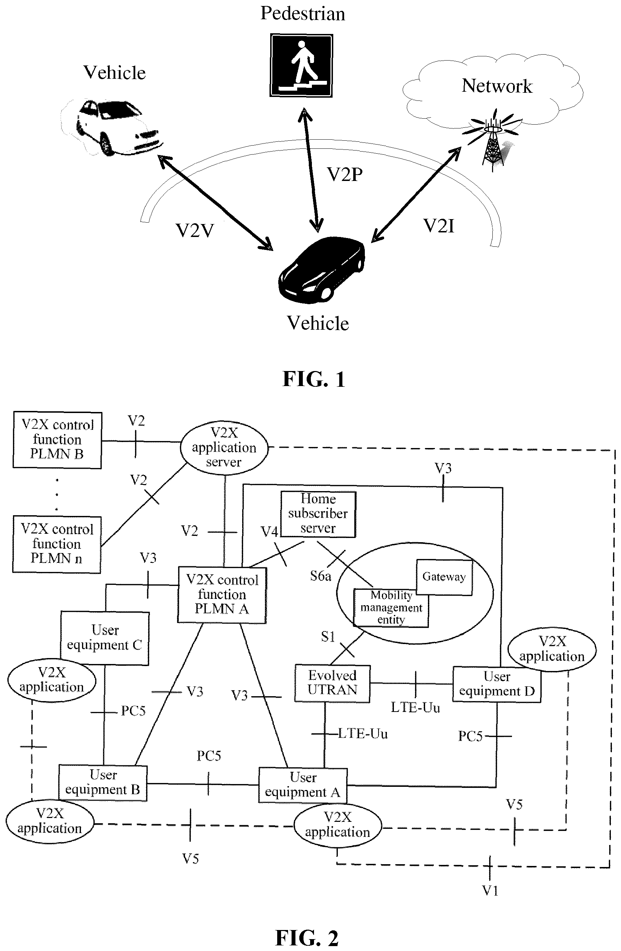

V2X refers to providing vehicle information through sensors, vehicle-mounted terminals and electronic tags mounted on vehicles; adopting various communication technologies to implement the interconnection and intercommunication of Vehicle to Vehicle (V2V), Vehicle to Pedestrian (V2P) and Vehicle to Infrastructure (V2I); effectively utilizing information such as extracting and sharing information on an information network platform, and effectively managing and controlling the vehicles and providing comprehensive services. FIG. 1 shows a basic architecture of the V2X.

V2X information is safety-related information and is generally not allowed to be discarded. If network congestion occurs, corresponding radio resource parameters need to be selected for different congestion levels. For this, 3GPP uses Channel Busy Ratio (CBR) to measure a channel congestion level. That is, a User Equipment (UE) in the V2X needs to select the radio resource parameters according to the CBR. A technical literature HUAWEI ET AL: "Congestion Control for Uu and PC5 based V2X transmission", 3GPP DRAFT; R2-163808 CONGESTION CONTROL FOR UU AND PC5 BASED V2X TRANSMISSION, 3RD GENERATION PARTNERSHIP PROJECT (3GPP), MOBILE COMPETENCE CENTRE; 650, ROUTE DESLUCIOLES; F-06921 SOPHIA-ANTIPOLIS CEDEX, vol. RAN WG2, no. Nanjing, China; 20160523-20160527 14 May 2016 (2016-05-14), XP051095348, discusses about congestion control for Uu and PC5 based V2X transmission. A technical literature ERICSSON: "Congestion Control for Sidelink-based V2X", 3GPP DRAFT; R2-1700929 CONGESTION CONTROL FOR SIDELINK-BASED V2X, 3RD GENERATION PARTNERSHIP PROJECT (3GPP), MOBILE COMPETENCE CENTRE; 650, ROUTE DESLUCIOLES; F-06921 SOPHIA-ANTIPOLIS CEDEX; FRA, vol. RAN WG2, no. Athens, Greece; 20170213-20170217 12 February 2017 (2017-02-06), XP051220590, discusses about congestion control for sidelink-based V2X.

During the research and practice process of the related technology, V2X service data cannot be transmitted normally in many times, and the problem of low transmission success rate exists.

### SUMMARY

The present application provides a radio resource configuration method and apparatus. The invention is set out in the appended set of claims.

Embodiments that are not covered by the claims are not part of the invention.

### BRIEF DESCRIPTION OF DRAWINGS

The drawings are provided for a further understanding of the technical solutions of the present application, and constitute a part of the description. The drawings and the embodiments of the present application are used to explain the technical solutions of the present application, and not intended to limit the technical solutions of the present application.
FIG. 1 is a schematic diagram of Vehicle-to-Everything (V2X);
FIG. 2 is a schematic diagram of an architecture for transmitting a V2X service through a PC5 interface;
FIG. 3 is a schematic flowchart of a radio resource configuration method according to an embodiment of the present application;
FIG. 4 is a schematic structural diagram of a radio resource configuration apparatus according to an embodiment of the present application;
FIG. 5 is a schematic flowchart of another radio resource configuration method according to an embodiment of the present application;
FIG. 6 is a schematic structural diagram of another radio resource configuration apparatus according to an embodiment of the present application;
FIG. 7 is a schematic flowchart of another radio resource configuration method according to an embodiment of the present application;
FIG. 8 is a schematic structural diagram of another radio resource configuration apparatus according to an embodiment of the present application;
FIG. 9 is a schematic flowchart of implementation of a radio resource configuration according to an embodiment of the present application;
FIG. 10 is a schematic flowchart of implementation of a radio resource configuration according to an embodiment 1 of the present application;
FIG. 11 is a schematic flowchart of implementation of a radio resource configuration according to an embodiment 2 of the present application;
FIG. 12 is a schematic flowchart of implementation of a radio resource configuration according to an embodiment 3 of the present application;
FIG. 13 is a schematic flowchart of implementation of a radio resource configuration according to an embodiment 4 of the present application;
FIG. 14 is a schematic flowchart of implementation of a radio resource configuration according to an embodiment 5 of the present application; and
FIG. 15 is a schematic structural diagram of a radio resource configuration system according to an embodiment of the present application.

### DETAILED DESCRIPTION

Objects, technical solutions and advantages of the present application will be clearer from a detailed description of embodiments of the present application in conjunction with the drawings hereinafter. It is to be noted that if not in collision, the embodiments and features therein in the present application may be combined with each other.

The steps shown in the flowcharts of the drawings may be performed by a computer system such as a group of computers capable of executing instructions. Moreover, although logical sequences are shown in the flowcharts, the shown or described steps may be performed in sequences different from those described herein in some cases.

Currently, two technologies for implementing V2X exist: Dedicated Short Range Communication (DSRC) and Long Time Evolution (LTE). The DSRC is based on IEEE802.11P standards and IEEE1609 series of standard protocols. The IEEE802.11P is responsible for physical layer and Medium Access Control (MAC) technologies and the IEEE1609 is responsible for upper specifications. Currently no standard for LTE-based V2X technology exist. The LTE V2X technology discussed by the 3rd Generation Partnership Project (3GPP) includes: a Road Side Unit (RSU) may be implemented through a stationary UE or an evolved Node B (eNB), or a base station, and V2VV2I, or V2P may be implemented through a PC5 interfaceor a Uu interface. The PC5 interface refers to a Device-to-Device (D2D) air interface, and the Uu interface refers to an air interface from the UE to the eNB. The system architecture for transmitting V2X services through the PC5 interface is shown in FIG. 2.

In the LTE V2X technology that is being studied by the 3GPP, for a UE autonomously selecting resources (mode4) manner, the UE selects a required PC5 interface in a sensing manner to send resources. An exceptional resource pool may be used when a Handover (HO) occurs, a Radio Link Failure (RLF) occurs, a resource pool is changed, or the like. Pedestrians in V2P generally do not have the PC5 receiving ability, that is, pedestrians may not select resources in the sensing manner.

V2X information is safety-related information and is generally not allowed to be discarded. If network congestion occurs, the corresponding radio resource parameters need to be selected for different congestion levels. That is, the UE in V2X needs to select radio resource parameters according to a CBR.

In the V2X, if the P-UE does not have the PC5 receiving capability or the measurement cannot be completed due to the time delay limit, the UE will not be able to measure the CBR. The failure of the UE to determine the radio resource parameters will directly result in the failure of normal transmission of V2X service data. Therefore, how to select the radio resource parameters by the UE when the CBR cannot be measured or when a CBR measurement load is reduced is an urgent problem to be solved. Therefore, how to select the radio resource parameters when the CBR cannot be measured or when the CBR measurement load is reduced is a technical problem that must be solved first for the normal transmission of V2X service data.

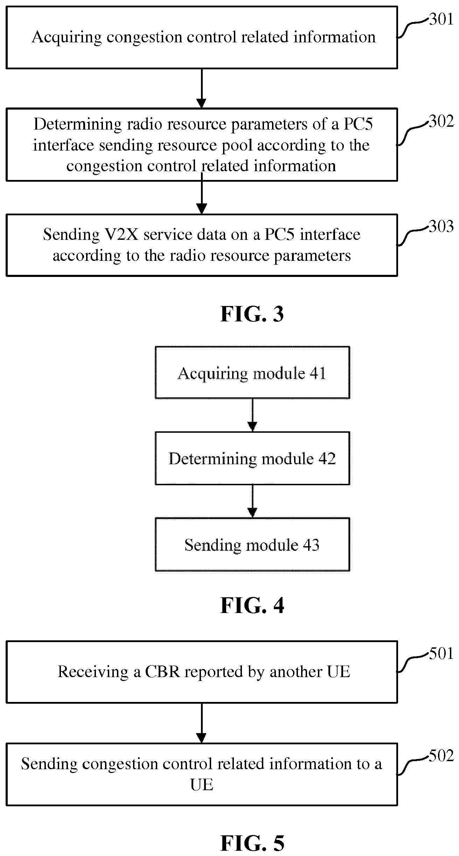

For convenience of description, V-UE refers to Vehicle-UE, and P-UE refers to Pedestrian-UE. As shown in FIG. 3, the present application provides a radio resource configuration method. The method is applied to a UE, and the method may include steps S301, S302 and S303.

In step 301, congestion control related information is acquired.

In step 302, radio resource parameters of a PC5 interface sending resource pool is determined according to the congestion control related information.

In step 303, V2X service data is sent on the PC5 interface according to the radio resource parameters.

In the present application, the UE may select radio resource parameters according to congestion control related information provided by an eNB or UE, or pre-configured data, so that when the UE does not have the CBR measurement capability, the UE cannot measure the CBR or the CBR measurement load is reduced, the UE is able to select radio resource parameters of a PC5 interface sending resource pool, and thereby normal operation of the V2X service of the UE is ensured, and congestion control of the PC5 interface resources is implemented.

In some implementation modes, in the step 301, the congestion control related information may be acquired in one of the following manners: receiving the congestion control related information from a base station eNB; receiving the congestion control related information from another UE; or reading the congestion control related information in pre-configured data. In practical applications, the other UE may be a UE located in a neighboring area of the UE. The pre-configured data may be the congestion control related information pre-configured in the UE.

In some implementation modes, in the step 301, the congestion control related information may be acquired from one of: Uu interface signaling, PC5 interface signaling, or pre-configured data. In practical applications, the Uu interface signaling is a system message or a dedicated RRC signaling.

In practical applications, the UE may acquire the congestion control related information through the Uu interface signaling, the PC5 interface signaling or the pre-configured data, and determine the radio resource parameters of the PC5 interface sending resource pool according to the congestion control related information, or directly extract the radio resource parameters of the PC5 interface sending resource pool from the congestion control related information. In practical applications, different services in the V2X have different priorities (e.g., the Proximity-based Services (ProSe) Services Per-Packet Priority (PPPP) of an emergency brake service is higher, while the PPPP of a periodic position report is lower), so in order to adapt to different application scenarios of the V2X Services, the radio resource parameters of the PC5 interface sending resource pool may be determined and selected on the basis of the congestion control related information in conjunction with the V2X service priorities (e.g., for ProSe, the V2X service priority may be PPPP).

The acquisition through the Uu interface signaling or the PC5 interface signaling or the pre-configured data refers to that: the UE acquires a specific value without measuring a related resource pool. The acquisition through the Uu interface refers to acquisition from information sent by the eNB, the acquisition through the PC5 interface signaling refers to acquisition from information sent by another neighboring UE, and the pre-configured data refers to the congestion control related information stored in advance in the UE. The UE searches for required radio resource parameters according to a look-up table provided by a network side eNB. The radio resource parameters include one or more of: maximum transmit power, the number of retransmissions of a data block, the number of data resource blocks, a range of a Modulation and coding scheme (MCS) and channel occupancy rate limitation. The channel occupancy rate refers to the number of subchannels used by the UE for transmission in one time period (e.g., 1000ms) divided by the total number of available subchannels. The PPPP is a priority of the V2X service and is provided through upper layer information. Each PPPP corresponds to a look-up table, and the table includes CBRs and radio resource parameters corresponding thereto. The look-up table is provided by the eNB, and is specifically indicated through the RRC signaling. If the UE is located outside the coverage area of the eNB, the look-up table is stored in the UE, such as being preconfigured in the memory of the UE or in a Universal Integrated Circuit Card (UICC) of the UE.

In the present application, the congestion control related information may include one of: a CBR value; an index value; part of the radio resource parameters; or all of the radio resource parameters. In practical applications, the congestion control related information may be CBR related information, or other information related to congestion control of the V2X service. The CBR value is a specific value, such as a ratio of subchannel energy exceeding a threshold value within a period of time. The radio resource parameters include one of: maximum transmit power, the number of retransmissions of a data block, the number of data resource blocks, the range of a MCS, or channel occupancy rate limitation. In practical applications, CBR is defined as the ratio of subchannel energy exceeding the threshold value in a resource pool over a period of time (generally 100 ms), where the subchannel energy is identified by a Side-Received Signal Strength Indication (S-RSSI). The threshold value is determined in advance.

Correspondingly, the step 302 of determining the radio resource parameters of the PC5 interface sending resource pool according to the congestion control related information may include one of: querying the radio resource parameters of the PC5 interface sending resource pool from a look-up table according to the CBR value; querying the radio resource parameters of the PC5 interface sending resource pool from the look-up table according to the index value; querying the radio resource parameters of the PC5 interface sending resource pool from the look-up table according to part of the radio resource parameters; or querying the radio resource parameters of the PC5 interface sending resource pool from all of the radio resource parameters.

In practical applications, the radio resource parameters may include one of or any combination of: maximum transmit power, the number of retransmissions of a data block, the number of data resource blocks, or the range of a MCS and channel occupancy rate limitation.

In practical applications, for a given CBR, the network side may provide a mapping table based on the priority (PPPP) of each V2X service. Each table includes a CBR (generally a range) and corresponding radio resource parameters. The UE may select the corresponding radio resource parameters from the mapping table according to the CBR value.

In practical applications, the eNB may provide all or part of the above parameters for the UE. If the eNB sends part of the parameters, the UE may look up in the look-up table to acquire other parameters according to the acquired part of the parameters. The index value of the look-up table corresponds to each PPPP, and the CBRs in the look-up table may be arranged in the ascending order or in the descending order. Table 1 below is an example of the look-up table, and the CBRs being arranged in the ascending order is taken as an example in table 1.

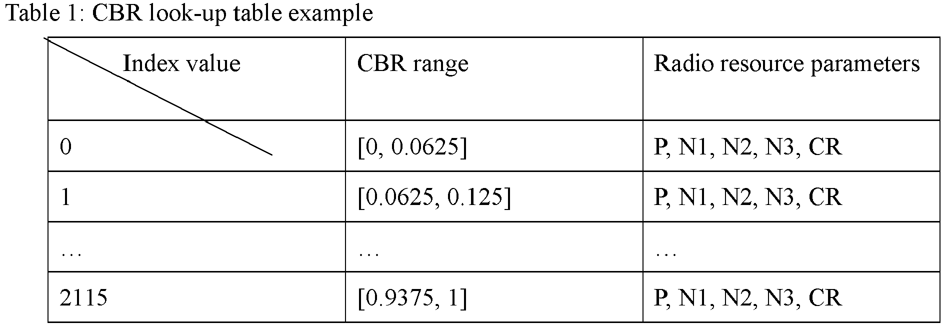

In Table 1, P represents the maximum transmit power, N1 represents the number of retransmissions of a data block, N2 represents the number of data resource blocks, N3 represents the MCS, and CR represents the channel occupancy limit. Different index values correspond to different radio resource parameters, and the UE may determine all the parameters according to one or more of the radio resource parameters.

In the present application, the congestion control related information acquired by the UE is a sending resource pool for the V2X, and the sending resource pool may include a PC5 communication exceptional resource pool and the like. The PC5 communication exceptional resource pool refers to a resource pool for PC5 interface communication and which may be temporarily used when an exceptional event (e.g., HO, RLF, resource pool update) occurs. The PC5 communication exceptional resource pool may be configured by the eNB (e.g., when the UE is in the coverage) or preconfigured, and the preconfigured PC5 communication exceptional resource pool is generally stored in the memory or UICC of the UE.

The PC5 communication exceptional resource pool may include: time domain resource information and frequency domain resource information. The time domain resource information is in units of subframes, and the frequency domain resource information is in units of Resource Blocks (RBs) or subchannels. A subchannel is formed by a plurality of continuous RBs. The PC5 exceptional communication resource pool may be used for one or two of a Physical Sidelink Control Channel (PSCCH) and a Physical Sidelink Shared Channel (PSSCH).

The PC5 communication exceptional resource pool is for the V2X communication in the mode4, that is, the UE autonomously selects the PC5 communication resource. The exceptional resource pool configured by the eNB may be indicated through a system message or a dedicated RRC signaling.

As shown in FIG. 4, the present application provides a radio resource configuration apparatus. The apparatus is applied to a UE, and may include: an acquiring module 41, a determining module 42 and a sending module 43.

The acquiring module 41 is configured to acquire congestion control related information.

The determining module 42 is configured to determine radio resource parameters of a PC5 interface sending resource pool according to the congestion control related information.

The sending module 43 is configured to send V2X service data on a PC5 interface according to the radio resource parameters.

In some implementation modes, the acquiring module 41 may be configured to acquire the congestion control related information in one of the following manners: receiving the congestion control related information from a base station eNB; receiving the congestion control related information from another UE; or reading the congestion control related information in pre-configured data.

In some other implementation modes, the acquiring module 41 may be configured to acquire the congestion control related information from one of: Uu interface signaling; PC5 interface signaling; or pre-configured data.

In practical applications, the congestion control related information may include one of: a CBR value; an index value; part of the radio resource parameters; and all of the radio resource parameters. The determining module 42 is specifically configured to determine the radio resource parameters of the PC5 interface sending resource pool in one of the following manners: querying the radio resource parameters of the PC5 interface sending resource pool from a look-up table according to the CBR value; querying the radio resource parameters of the PC5 interface sending resource pool from the look-up table according to the index value; querying the radio resource parameters of the PC5 interface sending resource pool from the look-up table according to part of the radio resource parameters; or querying the radio resource parameters of the PC5 interface sending resource pool from all of the radio resource parameters.

The present application further provides a radio resource configuration apparatus including a processor and a memory. The radio resource configuration apparatus is configured in a UE. The memory is configured to store computer executable instructions which, when executed by the processor, implement a following method: acquiring congestion control related information; determining radio resource parameters of a PC5 interface sending resource pool according to the congestion control related information; and sending V2X service data on a PC5 interface according to the radio resource parameters.

The above two radio resource configuration apparatuses each can implement all the details of the method shown in FIG. 3, and reference is made to the related records of the method shown in FIG. 3.

As shown in FIG. 5, the present application provides another radio resource configuration method. The method is applied to an eNB, and may include steps described below.

In step 501, a CBR reported by another UE is received.

In step 502, congestion control related information is sent to a UE.

In practical applications, the congestion control related information may be CBR related information, or other information related to V2X congestion control. The congestion control related information may include one of: a CBR value; an index value; part of the radio resource parameters; or all of the radio resource parameters.

The step of sending the congestion control related information to the UE may include: sending the congestion control related information by through a system message or dedicated RRC signaling.

In practical applications, the eNB indicates the CBR or the radio resource parameters through System Information (SIB) or dedicated RRC signaling. The CBR may be measured by another UE and be reported to the eNB. Another UE refers to a UE capable of CBR measurement, and the UE is able to perform CBR measurement and reporting according to the indication from the eNB. The CBR measurement is performed in units of a transmission resource pool of V2X. The reporting may be performed through the RRC signaling or a MAC Control Element (CE) signaling. The eNB receives a CBR report and indicates the CBR report to the UE through the RRC signaling, where the RRC signaling includes one of: a system message or dedicated RRC signaling (such as an RRC Connection Reconfiguration). The system message may be a V2X system message (e.g., SIB21). The indication sent by the eNB may include one of: a CBR, radio resource parameters, or an index value of a look-up table.

For further implementation details of the method shown in FIG. 5, reference may be made to the relevant records of the method shown in FIG. 3, and details are not repeated.

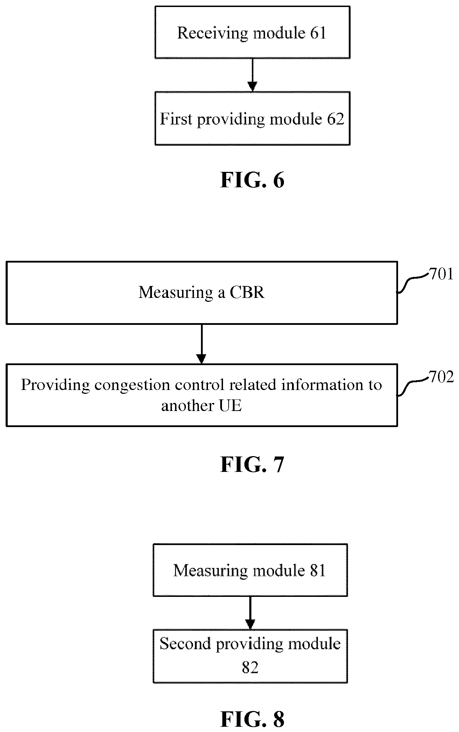

As shown in FIG. 6, the present application further provides a radio resource configuration apparatus. The apparatus is applied to an eNB, and may include: a receiving module 61, which is configured to receive a CBR reported by another UE; and a first providing module 62, which is configured to send congestion control related information to a UE.

The present application further provides a radio resource configuration apparatus including a processor and a memory. The radio resource configuration apparatus is configured in an eNB. The memory is configured to store computer executable instructions which, when executed by the processor, implement a following method: receiving a CBR reported by another UE; and sending congestion control related information to a UE.

In the present application, the above two radio resource configuration apparatuses configured in the eNB can implement all details of the method shown in FIG. 5. Refer is made to the above records, and details are not described herein again.

As shown in FIG. 7, the present application provides another radio resource configuration method. The method is applied to a UE, and includes steps described below.

In step 701, a CBR is measured.

In step 702, congestion control related information is provided for another UE.

The step of providing the congestion control related information for the another UE includes: receiving a request message from the other UE; and returning a response message to the other UE, where the congestion control related information is carried in the response message.

In practical applications, the congestion control related information may be CBR related information, or other information related to V2X congestion control. The congestion control related information may include one of: a CBR value; an index value; part of the radio resource parameters; or all of the radio resource parameters.

As shown in FIG. 8, an embodiment of the present application further provides a radio resource configuration apparatus. The apparatus is applied to a UE and includes: a measuring module 81, which is configured to measure a CBR; and a second providing module 82, which is configured to provide congestion control related information to another UE.

Another radio resource configuration apparatus includes: a processor and a memory. The radio resource configuration apparatus is configured in the UE. The memory is configured to store computer executable instructions which, when executed by the processor, implement a following method: measuring a CBR; and providing congestion control related information to another UE. For implementation details of the method shown in FIG. 7 and the corresponding radio resource configuration apparatus, reference may be made to the relevant records of the method shown in FIG. 3, and the details are not repeated.

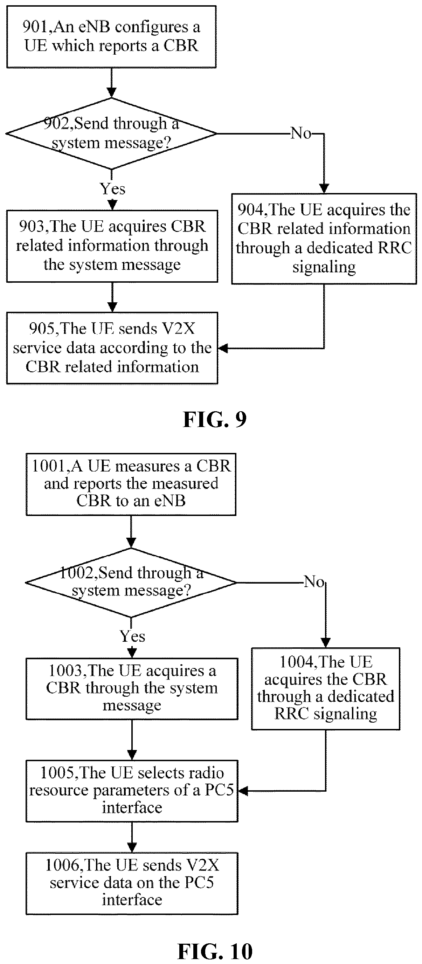

As shown in FIG. 9, a specific implementation process of a radio resource configuration in the present application may include steps described below.

In step 901, an eNB configures a UE which reports a CBR.

The configuration includes following content: a measurement target of the CBR, a measurement configuration of the CBR, a CBR measurement threshold (S-RSSI size), and a UE that needs to perform reporting.

Optionally, the configuration is sent through at least one of: a system broadcast message or a dedicated RRC signaling.

Optionally, the UEs having a CBR measurement capability each perform a CBR measurement according to an indication from the eNB, but it is not necessary that all of the UEs report the acquired CBR to the eNB. The reasons are as follows: on one hand, if the UE is located outside the coverage area of the eNB, the UE cannot report; and on the other hand, in order to reduce the uplink air interface load, merely the selected UE is required to report the CBR. The eNB may select a UE that needs to report the CBR according to one of: a capability of the UE, a V2X interest of the UE, a V2X sending resource pool, a manner in which the UE selects the PC5 resource, an area where the UE is located, uplink resource configuration of the Uu interface, or a PC5 interface resource, etc. For example, when the UE has a PC5 receiving capability, and/or the UE is interested in a particular V2X carrier frequency, and/or the UE employs a specific sending resource pool (such as an exceptional pool), and/or the UE selects the PC5 resource randomly or through partial sensing, and/or the UE is in the intersection, and/or the Uu uplink resource and the PC5 resource of the UE are shared, etc., the eNB may select the UE in the above scenario to report the CBR.

Optionally, the eNB may specify a condition for reporting the CBR. For example, when the CBR is higher than a certain threshold (congestion), or when the CBR is lower than a certain threshold (light load), the CRB is reported.

Step 902: The eNB determines whether to send CBR related information through a system message. If the eNB determines to send CBR related information through the system message, the process proceeds to step 903, and in condition that the eNB does not determine to send CBR related information through the system message, the process proceeds to step 904.

Optionally, the CBR related information includes one of: a CBR value, radio resource parameters, or an index value. The CBR value refers to an optional CBR value, such as a corresponding integer value. PC5 radio resource parameters include one of: all of the radio resource parameters or part of the radio resource parameters. The index value refers to the position of the CBR in a look-up table, such as the index values 0, 1, ..., 15, etc. in Table 1.

For an unknown reporting UE, the eNB chooses to send the CBR related information through the system message (such as SIB21). For a known reporting UE, the eNB chooses to send CBR related information through a dedicated RRC message (such as RRC Connection Reconfiguration). In addition, the eNB may simultaneously use the system message and the dedicated RRC signaling to send the CBR related information. In practical applications, the dedicated RRC signaling may be set to have a higher priority than the system message. That is, when the UE receives the system message and the dedicated RRC signaling at the same time, the UE will choose the content of the dedicated RRC signaling.

In step 903, the UE acquires the CBR related information through the system message.

The UE receives a V2X system message, and acquires the CBR related information. The UE is in an RRC-Idle or RRC-Connected mode, and the UE is within the coverage of the eNB.

In step 904, the UE acquires the CBR related information through the dedicated RRC signaling. The UE receives the dedicated RRC signaling to acquire the CBR related information. The UE is in the RRC-Connected mode, and the UE is within the coverage of the eNB. Optionally, the UE may send a CBR request message to the eNB, and the eNB sends a response message including the CBR related information to the UE.

It should be noted that, when the UE is located outside the coverage of the eNB, if the UE has a PC5 receiving capability, the UE may receive, through a PC5 interface, the CBR related information sent by another UE. Optionally, the UE sends a CBR request message to another UE, and another UE returns the CBR related information on the PC5 interface. In condition that the UE does not have the PC5 receiving capability, a pre-configured CBR or pre-configured radio resource parameters are used. To ensure that the UE is capable of sending a V2X service, the above pre-configured radio resource parameters are generally conservative, such as lower transmit power, lower MCS, smaller data blocks, and so on.

In step 905, the UE sends the V2X service data according to the CBR related information.

The UE acquires the CBR related information. If the CBR related information is a CBR value, the UE acquires the radio resource parameters by querying in the look-up table, and sends the V2X service data according to the radio resource parameters. If the CBR related information is all of the radio resource parameters, the UE may directly send the V2X service data according to the radio resource parameters. In condition that the CBR related information is part of the radio resource parameters, the UE acquires all of the radio resource parameters based on part of the radio resource parameters by querying in the look-up table, and sends the V2X service data according to all of the radio resource parameters. In condition that the CBR related information is an index value, the UE queries the corresponding radio resource parameters according to the index value, and sends the V2X service data according to the radio resource parameters.

The above methods in the present application may be applied to the V2X service, wearable service, Machine Type Communication (MTC), Public Safety (PS) communication, Internet Of Thing (IoT), UE to network relay, etc.

The implementation manner of the radio resource configuration in the present application is described in detail below with reference to specific embodiments.

### Embodiment 1

In the present embodiment, a UE may directly acquire a CBR. As shown in FIG. 10, an implementation process of the radio resource configuration in the present embodiment may include steps 1001, 1002, 1003, 1004, 1005 and 1006 described below.

In step 1001, the UE measures a CBR value and reports the CBR value to an eNB.

The measurement of the CBR may be implemented according to configuration of the eNB. The configuration of the eNB includes: a measurement target, measurement configuration, and the like. The measurement target may include one of: a V2X sending resource pool or a V2X carrier frequency. The measurement configuration may include a threshold value, that is, an S-RSSI value.

RRC signaling may be used for reporting.

In practical applications, the eNB selects a UE that needs to perform reporting, and sends measurement indication information to the UE. The measurement indication information may be sent to the UE through a system message or dedicated RRC signaling (such as RRC Connection Reconfiguration). The UE may perform measurement and reporting of the step 1001 according to the measurement indication information.

In step 1002, the eNB determines whether to send the CBR through the system message. In condition that the eNB determines to send the CBR through the system message, the process proceeds to step 1003, and in condition that the eNB does not determine to send the CBR through the system message, the process proceeds to step 1004.

The eNB determines to use the system message or the dedicated RRC signaling to send the CBR. In condition that the eNB cannot determine a UE that needs to perform reporting, the system message is used to send the CBR; and in condition that the eNB determines the UE that needs to perform reporting, the dedicated RRC signaling is used.

In step 1003, the UE acquires the CBR through the system message. The process proceeds to step 1005.

The UE acquires the CBR through the system message SIB21.

In step 1004, the UE acquires the CBR through the dedicated RRC signaling.

The UE acquires the CBR through the dedicated RRC signaling, such as RRC Connection Reconfiguration.

In step 1005, the UE selects radio resource parameters of a PC5 interface sending resource pool. The UE queries a CBR look-up table according to the acquired CBR, and acquires the radio resource parameters of the PC interface sending resource pool.

In step 1006, the UE sends V2X service data on a PC5 interface according to the radio resource parameters.

### Embodiment 2

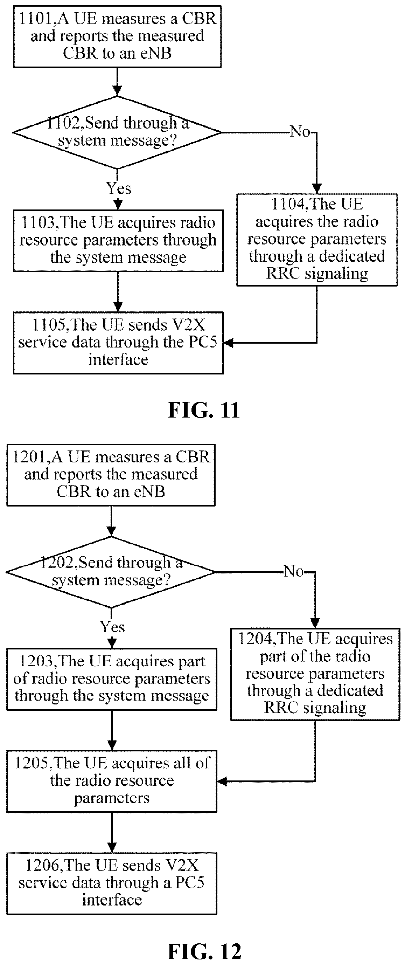

In the present embodiment, a UE may directly acquire all radio resource parameters. As shown in FIG. 11, an implementation process of the radio resource configuration in the present embodiment may include steps 1101, 1102, 1103, 1104 and 1105 described below.

In step 1101, the UE measures a CBR and reports the measured CBR to an eNB.

The step 1101 is similar to the step 1001 and will not be described herein again.

In step 1102, the eNB determines whether to send radio resource parameters through a system message. In condition that the eNB determines to send radio resource parameters through the system message, the process proceeds to step 1103, and in condition that the eNB does not determine to send radio resource parameters through the system message, the process proceeds to step 1104.

The step 1102 is similar to the step 1002 and will not be described herein again.

In step 1103, the UE acquires the radio resource parameters of a PC5 interface sending resource pool through the system message, and the process proceeds to step 1105.

In step 1104, the UE acquires the radio resource parameters of the PC5 interface sending resource pool through a dedicated RRC signaling.

In step 1105, the UE sends V2X service data on the PC5 interface according to the radio resource parameters.

### Embodiment 3

In the present embodiment, a UE may acquire part of radio resource parameters. Referring to FIG. 12, an implementation process of the radio resource configuration in the present embodiment may include steps 1201, 1202, 1203, 1204, 1205 and 1206 described below.

In step 1201, the UE measures a CBR and reports the measured CBR.

In step 1202, the eNB determines whether to send part of the radio resource parameters through a system message. In condition that the eNB determines to send part of the radio resource parameters through the system message, the process proceeds to step 1203, and in condition that the eNB does not determine to send part of the radio resource parameters through the system message, the process proceeds to step 1204.

Part of the radio resource parameters refer to not including one or more, but not all of the above all of the radio resource parameters, such as maximum transmit power, the number of retransmissions of a data block, the number of data resource blocks, a MCS and channel occupancy rate limitation.

In step 1203, the UE receives part of the radio resource parameters through the system message, and the process proceeds to step 1205.

In step 1204, the UE acquires part of the radio resource parameters through dedicated RRC signaling.

In step 1205, the UE acquires all of the radio resource parameters.

The UE queries in a look-up table according to the acquired part of parameters, and determines all of the radio resource parameters. All of the radio resource parameters include the radio resource parameters of a PC5 interface sending resource pool.

In step 1206, the UE sends V2X service data through a PC5 interface according to the radio resource parameters.

### Embodiment 4

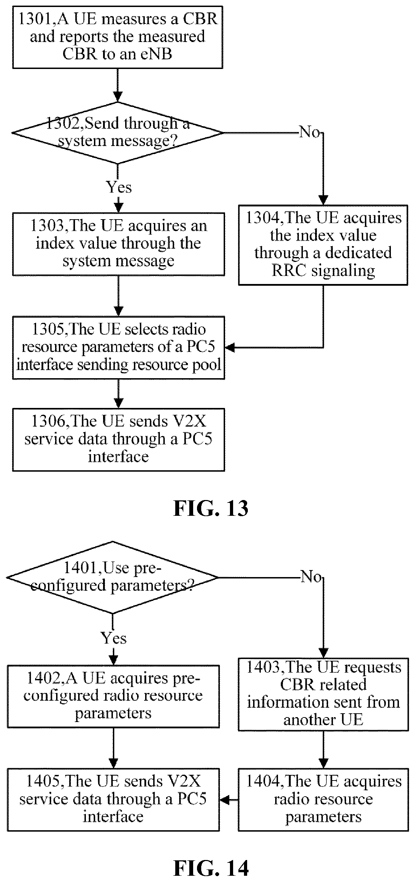

In the present embodiment, a UE may acquire an index value of a look-up table, and then acquire radio resource parameters of PC5 based on the index value. Referring to FIG. 13, an implementation process of radio resource configuration in the present embodiment may include steps 1301, 1302, 1303, 1304, 1305 and1306 described below.

In step 1301, the UE measures a CBR and reports the measured CBR.

In step 1302, an eNB determines whether to send an index value through a system message. In condition that the eNB determines to send the index value through the system message, the process proceeds to step 1303, and in condition that an eNB does not determine to send the index value through the system message, the process proceeds to step 1304.

In step 1303, the UE receives the index value through the system message, and the process proceeds to step 1305.

In step 1304, the UE receives the index value through a dedicated RRC signaling, and the process proceeds to step 1305.

In step 1305, the UE queries radio resource parameters of a PC5 interface sending resource pool according to the index value.

In step 1306, the UE sends V2X service data through a PC5 interface according to the radio resource parameters.

### Embodiment 5

A radio resource configuration process of a UE located outside the coverage of an eNB is described in detail in the present embodiment. Referring to FIG. 14, the radio resource configuration process in the present embodiment may include the steps 1401, 1402, 1403, 1404 and 1405 described below.

In step 1401, the UE determines whether to use pre-configured radio resource parameters. In condition that the UE determines to use the pre-configured radio resource parameters, the process proceeds to step 1402, and in condition that the UE does not determine to use the pre-configured radio resource parameters, the process proceeds to step 1403.

The UE determines the UE itself is located outside the coverage of the eNB. For example, if the UE cannot receive a valid system message or a synchronization signal or a reference signal, the UE is determined to be located outside the coverage of the eNB. If the UE does not have a PC5 receiving capability or temporarily cannot receive PC5 data, the US may use pre-configured radio resource parameters, otherwise request another UE to send CBR related information.

In step 1402, the UE uses the pre-configured radio resource parameters, and the process proceeds to step 1405.

In step 1403, the UE requests CBR related information from the other UE.

The other UE is a UE located in a neighboring area of the UE. The request may be sent through a PC5 interface.

In step 1404, the UE acquires radio resource parameters of a PC5 interface sending resource pool. The UE receives, through the PC5 interface, CBR information sent by the other UE , where the CBR information may be a CBR value. In condition that the CBR information is the CBR value, the UE queries corresponding radio resource parameters in a look-up table based on the CBR value.

In step 1405, the UE sends V2X service data through the PC5 interface according to the radio resource parameters.

### Embodiment 6 System Structure Embodiment

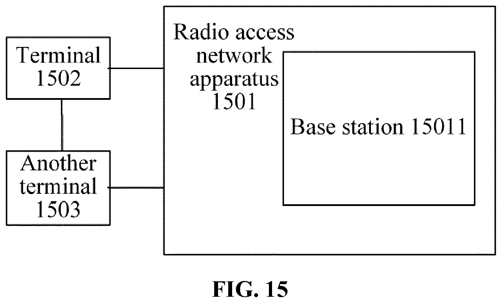

The present embodiment discloses a radio resource configuration system. Referring to FIG. 15, the system may include: a radio access network apparatus 1501 and a terminal 1502. The radio access network device 1501 may include at least a base station 15011. The terminal 1502 may be a UE. The base station 15011 is configured to provide congestion control related information to the terminal 1502, and receive a CBR reported by another UE. Another terminal 1503 may also exist in a communication network.

In practical applications, a base station is mainly responsible for indicating the congestion control related information to a terminal. The terminal may determine radio resource parameters of a PC5 interface sending resource pool based on the congestion control related information indicated by the base station, and send V2X service data based on the radio resource parameters. In the present embodiment, the terminal may include the radio resource configuration apparatus shown in FIG. 4, and implement the method shown in FIG. 3. The base station may include the radio resource configuration apparatus shown in FIG. 6, and implement the method shown in FIG. 5.

In practical applications, the system shown in FIG. 15 may further include another terminal 1503, and the other terminal 1503 may also provide the congestion control related information for the terminal 1502. In particular, when the terminal 1502 is located outside the coverage of the base station 15011, the terminal 1502 may request the congestion control related information from the other terminal 1503. In the present embodiment, the other terminal 1503 may include the radio resource configuration apparatus shown in FIG. 8, and implement the method shown in FIG. 7. In the present application, the terminal may directly acquire a CBR value, and determine radio resource parameters of a PC5 interface sending resource pool according to the CBR value, or the terminal directly acquires the radio resource parameters. The directly acquired radio resource parameters may be all or part of the radio resource parameters, and may include the radio resource parameters of the PC5 interface sending resource pool. At this time, the terminal may send the V2X service data according to the acquired radio resource parameters

In practical applications, the terminal may be one of: an On-Board Unit (OBU), a RSU, a UE, a V-UE, a P-UE, Wearables, UE-to-network relay, or IOT/MTC terminal. Unless otherwise stated, the UE in the present application represents one or more of the above terminals. The RSU may receive a request from a vehicle, ensure the vehicle to be accessed to the Internet and have the function of a gateway. In addition, the RSU also has the functions of data operation, storage and forwarding.

It should be noted that the PC5 interface in the present application refers to an interface between UEs, and may also be represented by other names (such as sidelink). Wireless transmission technologies such as a ProSe technology of licensed spectrum, Wireless Local Area Network (WLAN)/Wireless Fidelity (WiFi) (such as 802.11 series), Bluetooth or infrared technologies may be used on the PC5 interface. The PC5 interface may perform communication with the same frequency or different frequencies. The same frequency refers to that: the Uu interface and the PC5 interface share a frequency for communication and the different frequency refers to that: the PC5 interface uses a dedicated frequency, such as a 5.9 GHz V2X frequency for communication. According to the radio resource configuration method and apparatus in the present application, when a UE is within the coverage of an eNB, the UE may acquire congestion control related information from the eNB, determine the radio resource parameters of a PC5 interface sending resource pool based on the congestion control related information, and then send the V2X service data through the PC5 interface based on the radio resource parameters. When the UE moves outside of the coverage of the eNB, the UE may acquire the congestion control related information from another UE located in the neighboring area, determine the radio resource parameters of the PC5 interface sending resource pool based on the congestion control related information, and then send the V2X service data through the PC5 interface based on the radio resource parameters. When the UE cannot acquire the congestion control related information from the eNB or the other UE located in the neighboring area, the UE may acquire the radio resource parameters from pre-configured data of the UE itself, extract the radio resource parameters of the PC5 interface sending resource pool from the radio resource parameters, and send the V2X service data through the PC5 interface based on the radio resource parameters, so that the radio resource parameters can be acquired when a CBR cannot be measured or a CBR measurement load is reduced, and normal transmission of the V2X service data is ensured.

In the present embodiment, the UE acquires congestion control related information from the other UE located in the neighboring area, which may be acquiring the congestion control related information sent by another user located within a preset distance range.

In addition, an embodiment of the present application further provides a computer-readable storage medium, in which computer-executable instructions are stored, and when the computer executable instructions are executed, the radio resource configuration method shown in FIG. 3 is implemented.

In addition, an embodiment of the present application further provides a computer-readable storage medium, in which computer-executable instructions are stored, and when the computer executable instructions are executed, the radio resource configuration method shown in FIG. 5 is implemented.

In addition, an embodiment of the present application further provides a computer-readable storage medium, in which computer-executable instructions are stored, and when the computer executable instructions are executed, the radio resource configuration method shown in FIG. 7 is implemented.

Optionally, in the present embodiment, the above storage medium may include, but is not limited to, a USB flash disk, a read-only memory (ROM), a random access memory (RAM), a mobile hard disk, a magnetic disk, an optical disk or another medium capable of storing program codes. Optionally, in the present embodiment, a processor executes the steps in the methods described in the above embodiments according to the program codes stored in the storage medium. The program codes, the computer software and the like may be one of computer executable codes. Optionally, for specific examples in the present embodiment, reference may be made to the examples described in the above-mentioned embodiments and optional embodiments, and repetition will not be made in the present embodiment.

The computer storage medium provided by the embodiments of the present application may be a non-transitory storage medium or a non-volatile storage medium.

It should be understood by those skilled in the art that all or some steps in the methods described above may be implemented by relevant hardware (such as a processor) as instructed by programs, and the programs may be stored in a computer-readable storage medium, such as a read-only memory, a magnetic disk, an optical disk or the like. Optionally, all or some steps in the embodiments described above may also be implemented by using one or more integrated circuits. Accordingly, the modules/units in the embodiments described above may be implemented by hardware. For example, the functions of these modules/units may be implemented by integrated circuits. Alternatively, these modules/units may be implemented by software function modules. For example, the functions of these modules/units may be implemented by using a processor to execute program/instructions stored in a memory. The present application is not limited to any specific combination of hardware and software.

The above illustrate and describe basic principles, main features and advantages of the present application. The present application is not limited to the embodiments described above. The above embodiments and specification describe only the principles of the present application. Various modifications and improvements may be made in the present application without departing from the scope of the present application. These modifications and improvements are within the scope of the present application.

### INDUSTRIAL APPLICABILITY

In the embodiments of the present application, a UE may acquire congestion control related information from another device, so that even if the UE itself cannot measure and acquire the congestion control related information, the UE may also determine radio resource parameters of the PC5 interface sending resource pool from the congestion control related information acquired from the other device. The UE may send V2X service data at a PC5 interface according to the radio resource parameters. Therefore, the problem that V2X service data cannot be transmitted or the transmission success rate is low because part of UEs themselves cannot measure the radio resource parameters is solved. The method has a positive industrial effect. The UE can acquire the radio resource parameters through information interaction with another device, so that the transmission of V2X service data is completed. The method has the characteristics of simple implementation and high industrial achievability.

## Claims

1. A radio resource configuration method, applied to a User Equipment, UE, comprising:
acquiring (301) congestion control related information;
determining (302) radio resource parameters of a PC5 interface sending resource pool according to the congestion control related information; and
sending (303) Vehicle to Everything, V2X, service data on a PC5 interface according to the radio resource parameters;
**characterized in that** the acquiring congestion control related information comprises one of:
receiving the congestion control related information from another UE; or
reading the congestion control related information in pre-configured data;
**in that** the another UE is an UE having acquired the congestion control related information and located in a neighboring area of the UE;
**in that** the pre-configured data is congestion control related information prestored in the UE when the UE is located outside a coverage area of a base station eNB;
wherein the congestion control related information is determined according to a Channel Busy Ratio, CBR, reported by another UE, the radio resource parameters of the PC5 interface sending resource pool are determined according to a look-up table, the look-up table comprises CBRs and radio resource parameters corresponding to the CBRs;
when the UE is within the coverage area of the base station eNB, the look-up table is provided by the base station eNB and is indicated through RRC signaling, when the UE is located outside the coverage area of the base station eNB, the look-up table is stored in the UE;
**in that** the congestion control related information comprises one of:
a CBR value;
an index value;
part of the radio resource parameters; or
all of the radio resource parameters.

2. The method of claim 1, wherein the acquiring congestion control related information comprises: acquiring the congestion control related information in condition that the UE does not have an ability in Channel Busy Ratio, CBR, measurement or in condition that the UE is not able to perform the CBR measurement.

3. The method of claim 1, wherein the acquiring congestion control related information comprises: acquiring the congestion control related information from one of: Uu interface signaling; PC5 interface signaling; or pre-configured data;
wherein the Uu interface signaling is system message signaling or dedicated Radio Resource Control, RRC, signaling.

4. The method of claim 1,
wherein the determining radio resource parameters of a PC5 interface sending resource pool according to the congestion control related information comprises one of:
querying the radio resource parameters of the PC5 interface sending resource pool from the look-up table according to the index value;
querying the radio resource parameters of the PC5 interface sending resource pool from the look-up table according to part of the radio resource parameters; or
querying the radio resource parameters of the PC5 interface sending resource pool from all of the radio resource parameters.

5. The method of any one of claims 1 to 3, wherein the radio resource parameters comprise one of or any combination of:
maximum transmit power;
a number of retransmissions of a data block;
a number of data resource blocks;
a range of a Modulation and Coding Scheme, MCS; or
channel occupancy ratio limitation.

6. A radio resource configuration apparatus, applied to a User Equipment, UE, comprising:
an acquiring module (41), which is configured to acquire congestion control related information;
a determining module (42), which is configured to determine radio resource parameters of a PC5 interface sending resource pool according to the congestion control related information; and
a sending module (43), which is configured to send Vehicle to Everything, V2X, service data on a PC5 interface according to the radio resource parameters;
**characterized in that** the acquiring module is configured to acquire the congestion control related information through one of following manners:
receiving the congestion control related information from another UE; or
reading the congestion control related information in pre-configured data; and
**in that** the acquiring module is configured to acquire the congestion control related information from one of:
Uu interface signaling;
PC5 interface signaling; or
pre-configured data;
wherein the pre-configured data is congestion control related information prestored in the UE when the UE is located outside a coverage area of a base station eNB
wherein the congestion control related information is determined according to a Channel Busy Ratio, CBR, reported by another UE, the radio resource parameters of the PC5 interface sending resource pool are determined according to a look-up table, the look-up table comprises CBRs and radio resource parameters corresponding to the CBRs;
when the UE is within the coverage area of the base station eNB, the look-up table is provided by the base station eNB and is indicated through RRC signaling, when the UE is located outside the coverage area of the base station eNB, the look-up table is stored in the UE;
wherein the congestion control related information comprises one of:
a CBR value;
an index value;
part of the radio resource parameters; or
all of the radio resource parameters.

7. The apparatus of claim 6, wherein the determining module is configured to determine the radio resource parameters of the PC5 interface sending resource pool through one of following manners:
querying the radio resource parameters of the PC5 interface sending resource pool from the look-up table according to the index value;
querying the radio resource parameters of the PC5 interface sending resource pool from the look-up table according to partial of the radio resource parameters; or
querying the radio resource parameters of the PC5 interface sending resource pool from all of the radio resource parameters.

8. A radio resource configuration method, applied to a base station eNB, comprising:
receiving (501) a Channel Busy Ratio, CBR, reported by another User Equipment, UE; and sending (502) congestion control related information to a UE;
wherein the sending congestion control related information to the UE comprises: sending the congestion control related information through a system message or dedicated Radio Resource Control, RRC, signaling;
wherein radio resource parameters of a PC5 interface sending resource pool is determined by the UE according to the congestion control related information and a look-up table, the look-up table comprises CBRs and radio resource parameters corresponding to the CBRs;
when the UE is within the coverage area of the base station eNB, the look-up table is provided by the base station eNB and is indicated through RRC signaling, when the UE is located outside the coverage area of the base station eNB, the look-up table is stored in the UE;
**characterized in that** the congestion control related information comprises one of:
a CBR value;
an index value;
partial of the radio resource parameters; or
all of the radio resource parameters;
**in that** the another UE is UE capable of CBR measurement, and the another UE performs CBR measurement and report according to the indication from the base station eNB.

9. A computer storage medium configured to store computer executable instructions for executing, when run on a computer or processor, the radio resource configuration method of any one of claims 1 to 5 or 8.

## Patentansprüche

1. Funkressourcen-Konfigurationsverfahren, das auf ein Benutzergerät (UE) angewendet wird und Folgendes umfasst:
erwerben (301) von Informationen über die Staukontrolle;
bestimmen (302) von Funkressourcenparametern eines PC5-Schnittstellen-Senderessourcenpools gemäß den überlastungssteuerungsbezogenen Informationen; und
senden (303) von Vehicle to Everything, V2X, Dienstdaten über eine PC5-Schnittstelle entsprechend den Funkressourcenparametern;
**dadurch gekennzeichnet, dass** das Erfassen von Informationen, die sich auf die Staukontrolle beziehen, eines der folgenden Elemente umfasst:
empfangen der überlastungsbezogenen Informationen von einem anderen UE; oder
lesen der Staukontrollinformationen in vorkonfigurierten Daten;
dass es sich bei dem anderen UE um ein UE handelt, das die staukontrollbezogenen Informationen erworben hat und sich in einem benachbarten Bereich des UE befindet;
dass es sich bei den vorkonfigurierten Daten um überlastungsbezogene Informationen handelt, die im UE vorgespeichert sind, wenn sich das UE außerhalb eines Versorgungsbereichs einer Basisstation eNB befindet;
wobei die auf die Überlastungssteuerung bezogene Information gemäß einer Kanalbelegungsrate, Channel Busy Ratio, CBR, bestimmt wird, die von einem anderen UE gemeldet wird, die Funkressourcenparameter des PC5-Schnittstellen-Senderessourcenpools gemäß einer Nachschlagetabelle bestimmt werden;
die Nachschlagetabelle CBRs und Funkressourcenparameter umfasst, die den CBRs entsprechen;
wenn sich das UE innerhalb des Versorgungsbereichs der Basisstation eNB befindet, die Nachschlagetabelle von der Basisstation eNB bereitgestellt und durch RRC-Signalisierung angezeigt wird;
wenn sich das UE außerhalb des Versorgungsbereichs der Basisstation eNB befindet, die Nachschlagetabelle im UE gespeichert wird;
dass die Informationen zur Staukontrolle eines der folgenden Elemente umfassen:
einen CBR-Wert;
einen Indexwert;
Teil der Funkressourcenparameter; oder
alle Parameter der Funkressourcen.

2. Verfahren nach Anspruch 1,
wobei das Erfassen von überlastungssteuerungsbezogenen Informationen Folgendes umfasst:
erfassen der überlastungssteuerungsbezogenen Informationen unter der Bedingung, dass das UE keine Fähigkeit zur CBR-Messung, Channel Busy Ratio, besitzt, oder unter der Bedingung, dass das UE nicht in der Lage ist, die CBR-Messung durchzuführen.

3. Verfahren nach Anspruch 1,
wobei das Erfassen von überlastungssteuerungsbezogenen Informationen umfasst:
erfassen der auf die Überlastungssteuerung bezogenen Informationen aus einer der folgenden Quellen:
Uu-Schnittstellensignalisierung; PC5-Schnittstellensignalisierung; oder vorkonfigurierte Daten;
wobei die Uu-Schnittstellen-Signalisierung eine Systemnachrichten-Signalisierung oder eine dedizierte Radio Resource Control, RRC, Signalisierung ist.

4. Verfahren nach Anspruch 1,
wobei das Bestimmen von Funkressourcenparametern eines PC5-Schnittstellen-Senderessourcenpools gemäß den überlastungssteuerungsbezogenen Informationen eines der folgenden Elemente umfasst:
abfragen der Funkressourcenparameter des Sende-Ressourcenpools der PC5-Schnittstelle aus der Nachschlagetabelle entsprechend dem Indexwert;
abfragen der Funkressourcenparameter des Sende-Ressourcenpools der PC5-Schnittstelle aus der Nachschlagetabelle entsprechend einem Teil der Funkressourcenparameter; oder
abfragen der Funkressourcenparameter des Sende-Ressourcenpools der PC5-Schnittstelle aus allen Funkressourcenparametern.

5. Verfahren nach einem der Ansprüche 1 bis 3,
wobei die Funkressourcen-Parameter einen der folgenden oder eine beliebige Kombination der folgenden Parameter umfassen:
maximale Sendeleistung;
die Anzahl der erneuten Übertragungen eines Datenblocks;
eine Anzahl von Datenressourcenblöcken;
einen Bereich eines Modulations- und Kodierungsschemas, MCS; oder
Begrenzung des Kanalbelegungsgrades.

6. Eine Vorrichtung zur Funkressourcen-Konfiguration, die auf ein Benutzergerät (UE) angewandt wird und Folgendes umfasst:
ein Erfassungsmodul (41), das so konfiguriert ist, dass es staukontrollbezogene Informationen erfasst;
ein Bestimmungsmodul (42), das so konfiguriert ist, dass es die Funkressourcenparameter eines PC5-Schnittstellen-Senderessourcenpools gemäß den überlastungssteuerungsbezogenen Informationen bestimmt; und
ein Sendemodul (43), das so konfiguriert ist, dass es entsprechend den Funkressourcenparametern Vehicle to Everything, V2X, Dienstdaten über eine PC5-Schnittstelle sendet;
**dadurch gekennzeichnet, dass** das Erfassungsmodul dazu eingerichtet ist, die auf die Staukontrolle bezogenen Informationen auf eine der folgenden Weisen zu erfassen:
empfangen der überlastungsbezogenen Informationen von einem anderen UE; oder
lesen der Staukontrollinformationen in den vorkonfigurierten Daten; und
dass das Erfassungsmodul so konfiguriert ist, dass es die staukontrollbezogenen Informationen von einem der folgenden Elemente erfasst:
Uu-Schnittstellen-Signalisierung;
PC5-Schnittstellen-Signalisierung; oder
vorkonfigurierte Daten;
wobei die vorkonfigurierten Daten überlastungssteuerungsbezogene Informationen sind, die im UE vorgespeichert sind, wenn sich das UE außerhalb eines Versorgungsbereichs einer Basisstation eNB befindet,
wobei die überlastungssteuerungsbezogene Information gemäß einer von einem anderen UE gemeldeten Kanalbelegungsrate, Channel Busy Ratio, CBR, bestimmt wird, die Funkressourcenparameter des PC5-Schnittstellen-Senderessourcenpools gemäß einer Nachschlagetabelle bestimmt werden, wobei die Nachschlagetabelle CBRs und den CBRs entsprechende Funkressourcenparameter umfasst;
wenn sich das UE innerhalb des Versorgungsbereichs der Basisstation eNB befindet, wird die Nachschlagetabelle von der Basisstation eNB bereitgestellt und durch RRC-Signalisierung angezeigt, wenn sich das UE außerhalb des Versorgungsbereichs der Basisstation eNB befindet, die Nachschlagetabelle wird im UE gespeichert;
wobei die auf die Überlastungssteuerung bezogene Information eines der folgenden Elemente umfasst:
einen CBR-Wert;
einen Indexwert;
Teil der Funkressourcenparameter; oder
alle Parameter der Funkressourcen.

7. Vorrichtung nach Anspruch 6, wobei das Bestimmungsmodul dazu eingerichtet ist, die Funkressourcenparameter des PC5-Schnittstellen-Senderessourcenpools auf eine der folgenden Weisen zu bestimmen:
abfragen der Funkressourcenparameter des Sende-Ressourcenpools der PC5-Schnittstelle aus der Nachschlagetabelle entsprechend dem Indexwert;
abfragen der Funkressourcenparameter des PC5-Schnittstellen-Senderessourcenpools aus der Nachschlagetabelle entsprechend einem Teil der Funkressourcenparameter; oder
abfragen der Funkressourcenparameter des Sende-Ressourcenpools der PC5-Schnittstelle aus allen Funkressourcenparametern.

8. Funkressourcen-Konfigurationsverfahren, das auf eine Basisstation eNB angewendet wird und Folgendes umfasst:
empfangen (501) einer Kanalbelegungsrate (CBR), die von einer anderen Benutzereinrichtung (UE) gemeldet wird, und Senden (502) von Informationen zur Überlastungssteuerung an eine UE,
wobei das Senden von überlastungssteuerungsbezogenen Informationen an das UE umfasst:
übermitteln von Informationen zur Überlastungssteuerung durch eine Systemnachricht oder eine spezielle RRC-Signalisierung, Radio Resource Control,
wobei Funkressourcenparameter eines PC5-Schnittstellen-Senderessourcenpools durch das UE gemäß den überlastungssteuerungsbezogenen Informationen und einer Nachschlagetabelle bestimmt werden, wobei die Nachschlagetabelle CBRs und den CBRs entsprechende Funkressourcenparameter umfasst,
wenn sich das UE innerhalb des Versorgungsbereichs der Basisstation eNB befindet, die Nachschlagetabelle von der Basisstation eNB bereitgestellt und durch RRC-Signalisierung angezeigt wird, wenn sich das UE außerhalb des Versorgungsbereichs der Basisstation eNB befindet, die Nachschlagetabelle im UE gespeichert wird,
**dadurch gekennzeichnet, dass** die auf die Überlastungssteuerung bezogene Information eine der folgenden Informationen umfasst:
einen CBR-Wert,
einen Indexwert;
einen Teil der Parameter der Funkressourcen; oder
alle Parameter der Funkressourcen;
dass das andere UE ein UE ist, das zur CBR-Messung fähig ist, und dass das andere UE eine CBR-Messung und einen Bericht entsprechend der Anzeige von der Basisstation eNB durchführt.

9. Computerspeichermedium, das dazu eingerichtet ist, computerausführbare Befehle zu speichern, um bei Ausführung auf einem Computer oder Prozessor das Funkressourcen-Konfigurationsverfahren nach einem der Ansprüche 1 bis 5 oder 8 auszuführen.

## Revendications

1. Procédé de configuration de ressource radio, appliqué à un équipement utilisateur, UE, comprenant :
l'acquisition (301) d'une information relative au contrôle de la congestion ;
la détermination (302) de paramètres de ressource radio d'un groupe de ressources d'envoi d'interface PC5 selon l'information relative au contrôle de la congestion ; et
l'envoi (303) d'une donnée de service de véhicule à tout, V2X, sur une interface PC5 selon les paramètres de ressource radio ;
**caractérisé en ce que** l'acquisition de l'information relative au contrôle de la congestion comprend l'une parmi :
la réception de l'information relative au contrôle de la congestion en provenance d'un autre UE ; ou
la lecture de l'information relative au contrôle de la congestion dans une donnée préconfigurée ;
**en ce que** l'autre UE est un UE ayant acquis l'information relative au contrôle de la congestion et situé dans une zone voisine de l'UE ;
**en ce que** la donnée préconfigurée est une information relative au contrôle de la congestion préstockée dans l'UE lorsque l'UE est situé à l'extérieur d'une zone de couverture d'un noeud B évolué, eNB, de station de base ;
dans lequel l'information relative au contrôle de la congestion est déterminée selon un taux d'encombrement de canal, CBR, signalé par un autre UE, les paramètres de ressources radio du groupe de ressources d'envoi d'interface PC5 sont déterminés selon une table de consultation, la table de consultation comprend des CBR et des paramètres de ressource radio correspondant aux CBR ;
lorsque l'UE est au sein de la zone de couverture de l'eNB de station de base, la table de consultation est fournie par l'eNB de station de base et est indiquée par le biais d'une signalisation de contrôle de ressource radio, RRC, lorsque l'UE est situé à l'extérieur de la zone de couverture de l'eNB de station de base, la table de consultation est stockée dans l'UE ;
**en ce que** l'information relative au contrôle de la congestion comprend l'une parmi :
une valeur de CBR ;
une valeur d'indice ;
une partie des paramètres de ressource radio ; ou
la totalité des paramètres de ressource radio.

2. Procédé selon la revendication 1, dans lequel l'acquisition d'une information relative au contrôle de la congestion comprend : l'acquisition de l'information relative au contrôle de la congestion à condition que l'UE ne possède pas une aptitude à la mesure d'un taux d'encombrement de canal, CBR, ou à condition que l'UE ne soit pas apte à réaliser la mesure de CBR.

3. Procédé selon la revendication 1, dans lequel l'acquisition d'une information relative au contrôle de la congestion comprend : l'acquisition de l'information relative au contrôle de la congestion en provenance de l'une parmi : une signalisation d'interface Uu ; une signalisation d'interface PC5 ; ou une donnée préconfigurée ;
dans lequel la signalisation d'interface Uu est une signalisation de message système ou une signalisation de contrôle de ressource radio, RRC, dédiée.

4. Procédé selon la revendication 1,
dans lequel la détermination de paramètres de ressource radio d'un groupe de ressources d'envoi d'interface PC5 selon l'information relative au contrôle de la congestion comprend l'une parmi :
l'interrogation des paramètres de ressource radio du groupe de ressources d'envoi d'interface PC5 à partir de la table de consultation selon la valeur d'indice ;
l'interrogation des paramètres de ressource radio du groupe de ressources d'envoi d'interface PC5 à partir de la table de consultation selon une partie des paramètres de ressource radio ; ou
l'interrogation des paramètres de ressource radio du groupe de ressources d'envoi d'interface PC5 à partir de la totalité des paramètres de ressource radio.

5. Procédé selon l'une quelconque des revendications 1 à 3, dans lequel les paramètres de ressource radio comprennent l'un parmi ou une quelconque combinaison parmi :
une puissance d'émission maximale ;
un nombre de retransmissions d'un bloc de données ;
un nombre de blocs de ressource de données ;
une plage d'un schéma de modulation et de codage, MCS ; ou
une limitation de taux d'occupation de canal.

6. Appareil de configuration de ressource radio, appliqué à un équipement utilisateur, UE, comprenant :
un module d'acquisition (41), qui est configuré pour acquérir une information relative au contrôle de la congestion ;
un module de détermination (42), qui est configuré pour déterminer des paramètres de ressource radio d'un groupe de ressources d'envoi d'interface PC5 selon l'information relative au contrôle de la congestion ; et
un module d'envoi (43), qui est configuré pour envoyer une donnée de service de véhicule à tout, V2X, sur une interface PC5 selon les paramètres de ressource radio ;
**caractérisé en ce que** le module d'acquisition est configuré pour acquérir l'information relative au contrôle de la congestion par le biais de l'une des manières suivantes :
la réception de l'information relative au contrôle de la congestion en provenance d'un autre UE ; ou
la lecture de l'information relative au contrôle de la congestion dans une donnée préconfigurée ; et
**en ce que** le module d'acquisition est configuré pour acquérir l'information relative au contrôle de la congestion en provenance de l'une parmi :
une signalisation d'interface Uu ;
une signalisation d'interface PC5 ; ou
une donnée préconfigurée ;
dans lequel la donnée préconfigurée est une information relative au contrôle de la congestion préstockée dans l'UE lorsque l'UE est situé à l'extérieur d'une zone de couverture d'un noeud B évolué, eNB, de station de base ;
dans lequel l'information relative au contrôle de la congestion est déterminée selon un taux d'encombrement de canal, CBR, signalé par un autre UE, les paramètres de ressources radio du groupe de ressources d'envoi d'interface PC5 sont déterminés selon une table de consultation, la table de consultation comprend des CBR et des paramètres de ressource radio correspondant aux CBR ;
lorsque l'UE est au sein de la zone de couverture de l'eNB de station de base, la table de consultation est fournie par l'eNB de station de base et est indiquée par le biais d'une signalisation de contrôle de ressource radio, RRC, lorsque l'UE est situé à l'extérieur de la zone de couverture de l'eNB de station de base, la table de consultation est stockée dans l'UE ;
dans lequel l'information relative au contrôle de la congestion comprend l'une parmi :
une valeur de CBR ;
une valeur d'indice ;
une partie des paramètres de ressource radio ; ou
la totalité des paramètres de ressource radio.

7. Appareil selon la revendication 6, dans lequel le module de détermination est configuré pour déterminer les paramètres de ressource radio du groupe de ressources d'envoi d'interface PC5 par le biais de l'une des manières suivantes :
l'interrogation des paramètres de ressource radio du groupe de ressources d'envoi d'interface PC5 à partir de la table de consultation selon la valeur d'indice ;
l'interrogation des paramètres de ressource radio du groupe de ressources d'envoi d'interface PC5 à partir de la table de consultation selon une partie des paramètres de ressource radio ; ou
l'interrogation des paramètres de ressource radio du groupe de ressources d'envoi d'interface PC5 à partir de la totalité des paramètres de ressource radio.

8. Procédé de configuration de ressource radio, appliqué à un eNB de station de base, comprenant :
la réception (501) d'un taux d'encombrement de canal, CBR, signalé par un autre équipement utilisateur, UE ; et l'envoi (502) d'une information relative au contrôle de la congestion à un UE ;
dans lequel l'envoi d'une information relative au contrôle de la congestion à l'UE comprend :
l'envoi de l'information relative au contrôle de la congestion par le biais d'un message système ou d'une signalisation de contrôle de ressource radio, RRC, dédiée ;
dans lequel des paramètres de ressource radio d'un groupe de ressources d'envoi d'interface PC5 sont déterminés par l'UE selon l'information relative au contrôle de la congestion et une table de consultation, la table de consultation comprend des CBR et des paramètres de ressource radio correspondant aux CBR ;
lorsque l'UE est au sein de la zone de couverture de l'eNB de station de base, la table de consultation est fournie par l'eNB de station de base et est indiquée par le biais d'une signalisation de contrôle de ressource radio, RRC, lorsque l'UE est situé à l'extérieur de la zone de couverture de l'eNB de station de base, la table de consultation est stockée dans l'UE ;
**caractérisé en ce que** l'information relative au contrôle de la congestion comprend l'une parmi :
une valeur de CBR ;
une valeur d'indice ;
une partie des paramètres de ressource radio ; ou
la totalité des paramètres de ressource radio ;
**en ce que** l'autre UE est un UE capable d'une mesure de CBR, et l'autre UE réalise une mesure de CBR et signale selon l'indication provenant de l'eNB de station de base.

9. Support de stockage d'ordinateur configuré pour stocker des instructions exécutables par ordinateur pour l'exécution, lors de leur lancement sur un ordinateur ou un processeur, du procédé de configuration de ressource radio selon l'une quelconque des revendications 1 à 5 ou 8.
